# EUROPEAN PATENT APPLICATION

(11) **EP 4 779 769 A2**
(43) Date of publication of application: **22.07.2026**
(21) Application number: 26175558.1
(22) Date of filing: 06.01.2022
(51) Int. Cl.: H01M 50/186

(54) **POUCH TYPE SECONDARY BATTERY, BATTERY PACK, AND METHOD FOR MANUFACTURING POUCH TYPE SECONDARY BATTERY**

(30) Priority: 07.01.2021 KR 20210002203; 03.01.2022 KR 20220000415
(62) Divisional of application: 22736844.6
(71) Applicant: LG Energy Solution, Ltd., Seoul 07335 (KR)
(72) Inventor: LIM, Seong Yoon, 34122 DAEJEON (KR); OH, Sei Woon, 34122 DAEJEON (KR); KIM, Woo Sup, 34122 DAEJEON (KR)
(74) Representative: Plasseraud IP

(57) **Abstract**

Disclosed are a pouch type secondary battery, a battery pack, and a method for manufacturing the pouch type secondary battery. According to one aspect of the present invention, in an exterior accommodating an electrode assembly, a sealing part is formed along a circumference of the electrode assembly, the sealing part includes a first sealing part formed to cover an electrode lead, and one end of the first sealing part is formed on an area within a predetermined distance from an upper corner part of a circumference of the cup formed in the pouch.

## Description

### CROSS-REFERENCE TO RELATED APPLICATION

The present application claims the benefit of the priority of Korean Patent Application Nos. 10-2021-0002203, filed on January 07, 2021, and 10-2022-0000415, filed on January 03, 2022, which are hereby incorporated by reference in their entirety.

### TECHNICAL FIELD

The present invention relates to a pouch type secondary battery, a battery pack, and a method for manufacturing the pouch type secondary battery.

### BACKGROUND ART

Secondary batteries that are repetitively chargeable and dischargeable may be divided into cylindrical type secondary batteries, prismatic type secondary batteries, and pouch-type secondary batteries according to their structures and manufacturing methods. Among them, such a pouch-type secondary battery is manufactured by accommodating an electrode assembly in a pouch-type sheet and then sealing the sheet. When compared to other types of secondary batteries, the pouch-type secondary battery has a simple structure and high capacity per unit volume and thus is widely used in vehicle batteries or energy storage devices.

In more detail, in the pouch-type secondary battery, after forming a cup in a shape that is recessed in the pouch-type sheet, the electrode assembly is accommodated in the cup, and the pouch-type sheet is folded so that one area of the pouch-type sheet covers the electrode assembly. Then, a sealing part that seals a circumference of the electrode is formed to manufacture the pouch-type secondary battery.

The pouch type secondary battery is provided with a protruding electrode lead so as to be electrically connected to an external component. Here, the sealing part is formed to cover the electrode lead. However, according to the related art, there is a problem that cracks occur around the electrode lead.

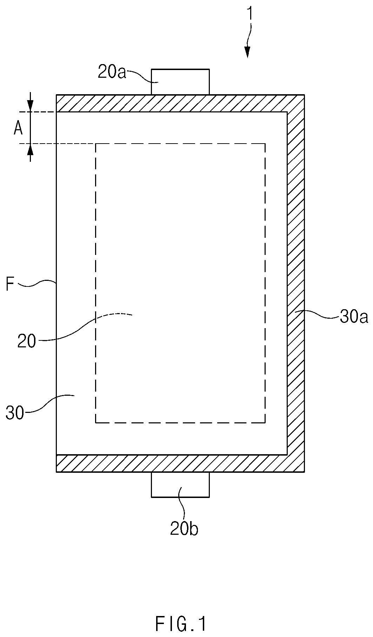

FIG. 1 is a plan view illustrating a structure of a pouch type secondary battery according to the related art.

Referring to FIG. 1, in a secondary battery 1 according to the related art, an electrode assembly 20 is accommodated in a pouch 30, and a sealing part 30a is formed around the electrode assembly 20.

An area of a circumference of the electrode assembly 20, on which the sealing part 30a is not formed, forms a folding part F at which a sheet constituting the pouch 30 is folded. According to the related art, since the sealing part is not formed on the folding part F, the sheet constituting the pouch is not bonded to the folding part F, but is in contact with the folding part F.

However, since the sheet constituting the pouch is not boned to the folding part F, when the sealing part 30a is bent, stress is concentrated to an area of the folding part F, which is adjacent to the sealing part 30a, to cause damage such as cracks in the pouch forming the folding part F.

Particularly, this problem frequently occurs in the vicinity (see reference symbol A of FIG. 1)of the sealing part forming to cover electrode leads 20a and 20b at the folding part F. For example, in the case of a battery module or a battery pack, a plurality of pouch type secondary batteries are stacked, and the electrode leads extending outward from the pouch type secondary batteries are collected to be welded so as to form a bundle of the electrode leads. As a result, the bundle of the electrode lead may be formed, and the group of the plurality of secondary batteries may be assembled to manufacture the battery module or the battery pack. However, in the assembly process, the electrode lead may be bent upward or downward with respect to a thickness direction of the secondary battery. In this case, force may be concentrated to a portion of the folding part F in the vicinity (see reference symbol A of FIG. 1) of the sealing part formed to cover the electrode leads 20a and 20b, and thus, a phenomenon, in which the sealing part is sharply folded, may occur. As a result, if the sealing part is bent over a predetermined angle, there is a problem in that the stress is concentrated to cause pouch cracks (including internal aluminum cracks).

### DISCLOSURE OF THE INVENTION

### TECHNICAL PROBLEM

Therefore, an object of the present invention for solving the above problems is to solve the problem in which a pouch is damaged or cracked in an area of a folding part F, which is adjacent to a sealing part covering an electrode lead.

### TECHNICAL SOLUTION

A pouch type secondary battery according to the present invention includes: an electrode assembly having a structure, in which electrodes and a separator are alternately disposed; a pouch type exterior in which a cup (P) having a shape recessed to accommodate the electrode assembly is formed; and an electrode lead electrically connected to the electrode assembly and protruding outward through a circumference of the exterior, wherein a sealing part is formed on the exterior along the circumference of the electrode assembly, the electrode lead comprises a first electrode lead protruding outward through an upper circumference of the exterior, the sealing part comprises a first sealing part formed to cover the first electrode lead, and one end of the first sealing part is formed on an area within a predetermined distance from an upper corner part of a circumference of the cup (P).

Left and right ends of the first sealing part may be formed on an area within a predetermined distance from an upper left upper corner part and an area within a predetermined distance from an upper right corner part of the circumference of the cup (P), respectively.

The electrode lead may include a second electrode lead protruding outward through a lower circumference of the exterior, the sealing part may include a second sealing part formed to cover the second electrode lead, and one end of the second sealing part may be formed on an area within a predetermined distance from a lower corner part of the circumference of the cup (P).

Left and right ends of the second sealing part may be formed on an area within a predetermined distance from a lower left upper corner part and an area within a predetermined distance from a lower right corner part of the circumference of the cup (P), respectively.

Here, the predetermined distance may be 5 mm.

An inner circumference of an area of the first sealing part, which is provided on an area within a predetermined distance from the upper corner part of the circumference of the cup (P) may have a straight-line shape.

An inner circumference of an area of the first sealing part, which is provided on an area within a predetermined distance from the upper corner part of the circumference of the cup (P) may have a curved shape.

An inner circumference of an area of the first sealing part, which is provided on an area within a predetermined distance from the upper corner part of the circumference of the cup (P) may have straight-line and curved shapes.

The curved shape may be formed to be concave when viewed from the electrode assembly.

The curved shape may be formed to be convex when viewed from the electrode assembly.

The pouch type exterior may include a first area and a second area, in the pouch type exterior, a folding part may be formed on a boundary between the first area and the second area so that, when the first area is folded with respect to the second area, the first area and the second area face each other, one end of a left end and a right end of the first sealing part, which is provided to be adjacent to the folding part, may be formed on an area within a predetermined distance from the upper corner part of the circumference of the cup (P), and one end of a left end and a right end of the second sealing part, which is provided to be adjacent to the folding part, may be formed on an area within a predetermined distance from the lower corner part of the circumference of the cup (P).

Here, the predetermined distance may be 5 mm.

The sealing part may further include a third sealing part formed to connect the first sealing part to the second sealing part.

An upper end of the third sealing part may be connected to the first sealing part, and a lower end of the third sealing part may be connected to the second sealing part.

The third sealing part may be bent in a direction of a thickness (t) of the electrode assembly.

At least one or more of the upper corner part and the lower corner part may have a rounded shape.

The first sealing part may include: a normal lead sealing area (S1) on which an area disposed above the area within a predetermined distance from the upper corner part of the circumference of the cup is sealed to cover the first electrode lead by a sealing tool; and an additional sealing area (S2) on which the area within the predetermined distance from the upper corner part of the circumference of the cup is sealed by the sealing tool.

The normal lead sealing area (S1) and the additional sealing area (S2) may have different sealing thicknesses for each section.

A method for manufacturing a pouch type secondary battery according to the present invention includes: a process of preparing an electrode assembly having a structure, in which electrodes and separators are alternately disposed, and a pouch type exterior, in which a cup (P) having a recessed shape is formed; a process of accommodating the electrode assembly in the cup; a process of folding the exterior so that one area and the other area of the exterior face each other; a process of disposing a first electrode lead protruding outward through an upper circumference of the exterior and a second electrode lead protruding outward through a lower circumference of the exterior; a process of forming a first sealing part on the exterior to cover the first electrode lead; and a process of forming a second sealing part on the exterior to cover the second electrode lead, wherein, in the process of forming the first sealing part, one end of the first sealing part is sealed to be formed on an area within a predetermined distance from the upper corner part of a circumference of the cup (P).

In the process of forming the second sealing part, one end of the second sealing part may be sealed to be formed on an area within a predetermined distance from the lower corner part of the circumference of the cup (P).

The process of forming the first sealing part may include a two-stage sealing process comprising a normal lead sealing process and an additional sealing process.

The normal lead sealing process may be a process of sealing an area, which is disposed above the area within the predetermined distance from the upper corner part of the circumference of the cup, through a sealing tool so that a pouch of a first area and a pouch of a second area cover the first electrode lead to form a normal lead sealing area (S1), and the additional lead sealing process may be a process of sealing an area, which is disposed within the predetermined distance from the upper corner part of the circumference of the cup, through the sealing tool so that the pouch of the first area and the pouch of the second area are bonded to each other to form an additional sealing area (S2).

In the process of forming the first sealing part, the normal lead sealing area (S1) and the additional sealing area (S2) may have different sealing thicknesses for each section.

The method may further include a process of forming a third sealing part formed along a circumference of the electrode assembly to connect the first sealing part to the second sealing part.

### ADVANTAGEOUS EFFECTS

According to the present invention, the problem in which the pouch is damaged or cracked in the area of the folding part F, which is adjacent to the sealing part covering an electrode lead, may be solved.

### BRIEF DESCRIPTION OF THE DRAWINGS

FIG. 1 is a plan view illustrating a structure of a pouch type secondary battery according to the related art.
FIG. 2 is a plan view illustrating a state in which a first sealing part and a second sealing part are formed in a pouch type secondary battery according to the present invention.
FIG. 3 is a vertical cross-sectional view illustrating the pouch type secondary battery when taken along line C-C of FIG. 2.
FIG. 4 is an enlarged view illustrating a configuration of a first sealing part of a pouch type secondary battery according to a first embodiment of the present invention.
FIG. 5 is an enlarged view illustrating a configuration a first sealing part of a pouch type secondary battery according to a second embodiment of the present invention.
FIG. 6 is an enlarged view illustrating a configuration of a first sealing part of a pouch type secondary battery according to a third embodiment of the present invention.
FIG. 7 is a plan view illustrating a state in which the first sealing part and the second sealing part are formed in the pouch type secondary battery according to the present invention.
FIG. 8 is a plan view illustrating a state in which the first sealing part is formed through a normal lead sealing process and an additional sealing process.

### MODE FOR CARRYING OUT THE INVENTION

Hereinafter, a pouch type secondary battery, a battery pack, and a method for manufacturing the pouch type secondary battery according to the present invention will be described with reference to the drawings.

Pouch type secondary battery and battery pack

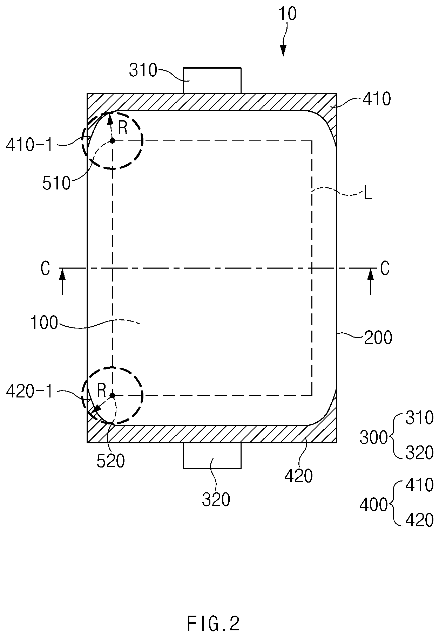

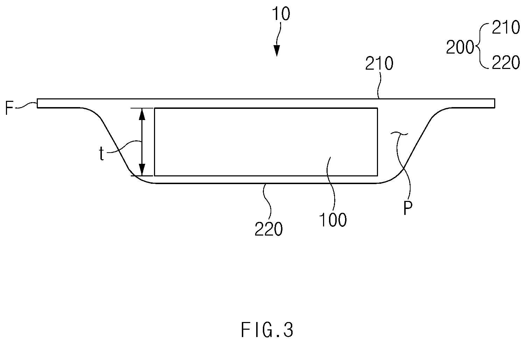

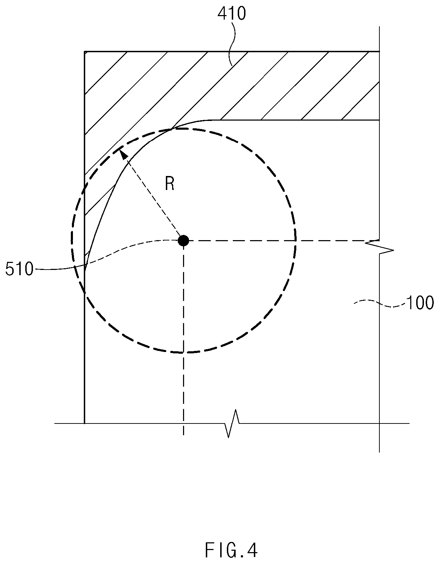

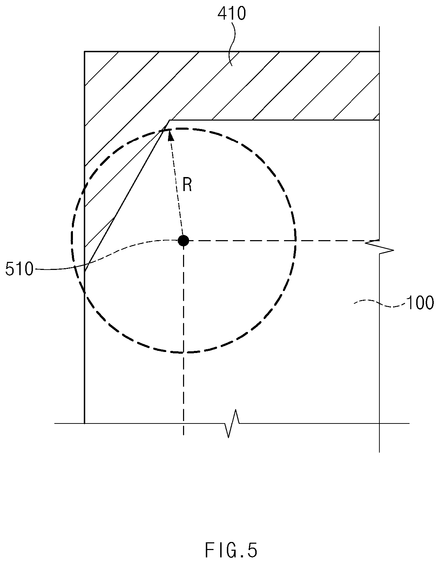

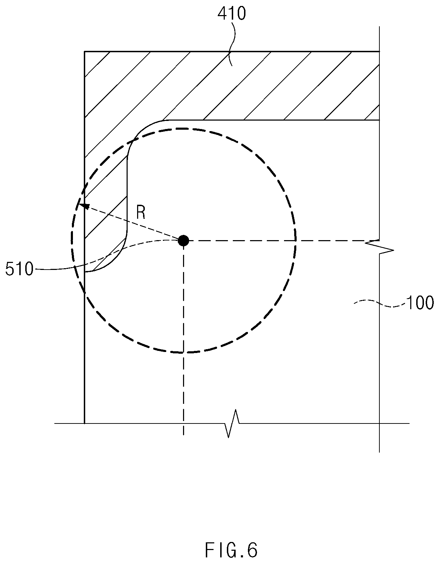

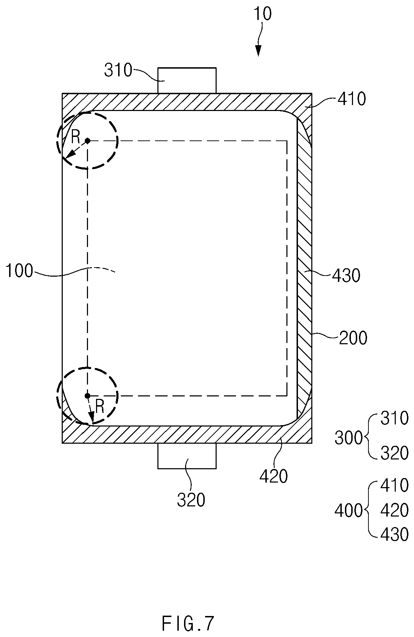

FIG. 2 is a plan view illustrating a state in which a first sealing part and a second sealing part are formed in a pouch type secondary battery according to the present invention. FIG. 3 is a vertical cross-sectional view illustrating the pouch type secondary battery when taken along line C-C of FIG. 2. FIG. 4 is an enlarged view illustrating a configuration of a first sealing part of a pouch type secondary battery according to a first embodiment of the present invention. FIG. 5 is an enlarged view illustrating a configuration a first sealing part of a pouch type secondary battery according to a second embodiment of the present invention. FIG. 6 is an enlarged view illustrating a configuration of a first sealing part of a pouch type secondary battery according to a third embodiment of the present invention. FIG. 7 is a plan view illustrating a state in which the first sealing part and the second sealing part are formed in the pouch type secondary battery according to the present invention.

As illustrated in FIGS. 2, 3, and 7, a pouch type secondary battery 10 (hereinafter, referred to as a 'secondary battery') according to the present invention may include an electrode assembly 100 having a structure, in which electrodes and a separator are alternately disposed, and a pouch type exterior 200 (hereinafter, referred to as an 'exterior') in which a cup P having a shape recessed to accommodate the electrode assembly 100 is formed.

As illustrated in FIG. 3, the exterior 200 may include a first area 210 and a second area 220. Here, in the exterior 200, a folding part F formed on a boundary between the first area 210 and the second area 220 so that the first area 210 and the second area 220 face each other as the first area 210 is folded with respect to the second area 220. This may be considered that the second area 220 is folded with respect to the first area 210 at the folding part F. Although FIG. 3 illustrates a state in which the cup P is formed in the second area 220 provided at a lower side in the exterior 200, unlike this, the cup P may be formed in the first area 210 provided at an upper side, or the cup P may be formed in both the first area 210 and the second area 220. In FIG. 2, the boundary L that is a circumference of the cup P formed in the exterior 200 is illustrated by a dotted line.

Subsequently, referring to FIGS. 2 and 7, the secondary battery 10 according to the present invention further includes electrode leads 310 and 320 which are electrically connected to the electrode assembly 100 and protrude outward through the circumference of the exterior 200.

Here, the electrode leads 310 and 320 may include a first electrode lead 310 protruding outward through an upper circumference of the exterior 200 and a second electrode lead 320 protruding outward through a lower circumference of the exterior 200 and having a polarity different from that of the first electrode lead. That is, in the secondary battery 10 according to the present invention, the first electrode lead 310 and the second electrode lead 320 may protrude in opposite directions (that the first electrode lead and the second electrode lead protrude in the opposite directions are merely one embodiment of the present invention, and thus, the present invention is not limited thereto, and a case in which the first electrode lead and the second electrode lead protrude in the same direction may be applied to the technical idea of the present invention).

Referring to FIGS. 2 and 7, a sealing part 400 may be formed on the exterior 200 along a circumference of the electrode assembly 100. The sealing part 400 may be formed by bonding the first area 210 and the second area 220 of the exterior 200 to each other. Here, the sealing part 400 may be formed on an area of the exterior 200 surrounding the circumference of the electrode assembly 100 except for the area on which the folding part F is formed.

The sealing part 400 may include a first sealing part 410 formed to cover the first electrode lead 310, a second sealing part 420 formed to cover the second electrode lead 320, and a third sealing part 430 formed to connect the first sealing part 410 to the second sealing part 420. Referring to FIG. 7, an upper end of the third sealing part 430 may be connected to the first sealing part 410, and a lower end of the third sealing part 430 may be connected to the second sealing part 420. Also, the third sealing part 430 may be formed to face the folding part F with the electrode assembly 100 or the cup P therebetween. Also, as will be described later, the third sealing part 430 may be formed later in time than the first sealing part 410 and the second sealing part 420 (however, the present invention is not limited thereto, and if one sealing tool is used as necessary, the third sealing part 430, the first sealing part 410, and the second sealing part 420 may be formed at the same time).

Referring to FIGS. 2 and 7, one end of the first sealing part 410 of the pouch type secondary battery 10 according to the present invention or one end of the second sealing part 420 may be formed to face the folding part F. In addition, one end 410-1 of the first sealing part 410 according to the present invention may be formed on an area within a predetermined distance R from an upper corner part 510 of the circumference of the cup P of the exterior 200, and one end 420-1 of the second sealing part 420 may be formed on the area within a predetermined distance R from a lower corner part 520 of the circumference of the cup P of the exterior 200. FIG. 2 illustrates a structure in which the one end 410-1 of the first sealing part 410 is formed on a virtual circle having a radius R centered on the upper corner part 510 of the circumference of the cup P. The fact that the one end 410-1 of the first sealing part 410 is formed on the area within the predetermined distance R from the upper corner part 510 of the circumference of the cup P of the exterior 200 means that the one end 410-1 of the first sealing part 410 is formed within a range of the virtual circle.

According to the present invention, as illustrated in FIGS. 2 and 7, both a left end and a right end of the first sealing part 410 may be formed on the area within the predetermined distance R from the upper corner part 510 of the circumference of the cup P, and both a left end and a right end of the second sealing part 410 may also be formed on the area within the predetermined distance R from the lower corner part 520 of the circumference of the cup P.

Specifically, the left and right ends of the first sealing portion may be formed on the area within the predetermined distance R from the upper left corner part and on the area within the predetermined distance R from the upper right corner part of the circumference the cup P, respectively. In addition, the left and right ends of the second sealing portion may be formed on the area within the predetermined distance R from the lower left corner part and on the area within the predetermined distance R from the lower right corner part of the circumference the cup P, respectively. In this case, the predetermined distance R may be 5 mm. If the predetermined distance R is too large, the sealing part may not reach a cracking area of the pouch, and if the predetermined distance R is too small, the sealing may have to be performed up to an excessive and unnecessary position. Thus, the predetermined distance R may be 5 mm.

However, unlike this, according to another embodiment of the present invention, only one end (i.e., only the left end in FIG. 7) of left and right ends of a first sealing part 410, which is provided adjacent to a folding part F, may be formed on an area within a predetermined distance R from an upper corner part 510 of a circumference of a cup P, and only one end (i.e., only the left end in FIGS. 2 and 7), which is provided to be adjacent to the folding part F, of the left and right ends of the second molding part 420 may be formed on an area within the predetermined distance R from a lower corner part 520 of the circumference of the cup P. In this case, the predetermined distance R may also be 5 mm. If the predetermined distance R is too large, the sealing part may not reach a cracking area of the pouch, and if the predetermined distance R is too small, the sealing may have to be performed up to an excessive and unnecessary position.

According to the present invention, the one end of the first sealing part 410 that covers the first electrode lead 310 and the second electrode lead 320 may be formed to extend toward the folding part F so as to enter the area within the predetermined distance R from the upper corner part 510 of the circumference of the cup P when compared to the related art or may be formed to extend toward the folding part F so as to enter the area within the predetermined distance R from the lower corner part 520 of the circumference of the cup P when compared to the related art, thereby preventing cracks from occurring at the folding part or the vicinity of the folding part due to concentration of stress.

Particularly, according to the present invention, since an end of the ends of the first sealing part and the second sealing part, which is provided to be adjacent to the folding part, extends downward or upward toward the folding part, the occurrence of the cracks may be prevented even the area (see reference symbol A of FIG. 1) on which the cracks frequently occur when the pouch type secondary battery is manufactured according to the related art.

For example, in the process of assembling the group of the plurality of secondary batteries to manufacture the battery module and the battery pack, the electrode lead may be bent upward or downward with respect to the thickness direction of the secondary battery. In this case, since the folding part F that is in the vicinity (see reference symbol A of FIG. 1) of the sealing part formed to cover the electrode leads 20a and 20b is sealed in the present invention, a phenomenon, in which the folding part F is sharply folded, may not occur to prevent the pouch cracks from occurring due to the concentration of the stress. That is, if the lead is not sealed, the lead is bent upward or downward with respect to the thickness direction of the secondary battery, a portion A of the pouch may be sharply folded. However, if the lead is sealed, even though the lead is bent, the portion A of the sealing part of the pouch may be only curved (i.e., bent), but may not sharply folded. Thus, the occurrence of the cracks of the pouch may be prevented.

### Embodiment 1

As illustrated in FIG. 4, according to a first embodiment of the present invention, an inner circumference of an area of the first sealing part 410, which is provided on an area within a predetermined distance R from an upper corner part 510 of a circumference of a cup P may have a curved shape. In addition, according to the first embodiment, an inner circumference of an area of a second sealing part 420 within a predetermined distance R from a lower corner part 520 of the circumference of the cup P may also have a curved shape.

### Embodiment 2

On the other hand, as illustrated in FIG. 5, according to a second embodiment of the present invention, an inner circumference of an area of the first sealing part 410, which is provided on an area within a predetermined distance R from an upper corner part 510 of a circumference of a cup P may have a straight line shape. In addition, according to the second embodiment, an inner circumference of an area of a second sealing part 420 within a predetermined distance R from a lower corner part 520 of the circumference of the cup P may also have a straight line shape.

### Embodiment 3

Alternatively, as illustrated in FIG. 6, according to a third embodiment of the present invention, an inner circumference of an area of the first sealing part 410, which is provided on an area within a predetermined distance R from an upper corner part 510 of a circumference of a cup P may include a straight line and a curve. In addition, according to the first embodiment, an inner circumference of an area of a second sealing part 420 within a predetermined distance R from a lower corner part 520 of the circumference of the cup P may also include a straight line and a curve.

Here, according to the first and third embodiments of the present invention, each of the curves formed on the inner circumferences of the first sealing part 410 and the second sealing part 420 may be formed to be concave when viewed from the electrode assembly 100 (see FIG. 4). However, the curve may be formed to be convex when viewed from the electrode assembly 100 (see FIG. 6). In addition, it may be formed to include both a concave shape and a convex shape.

### Embodiment 4

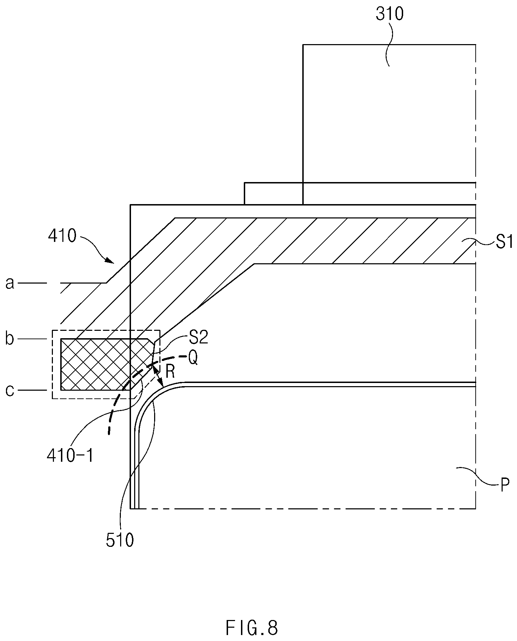

According to a fourth embodiment of the present invention, at least one of an upper corner part 510 or a lower corner part 520 may be formed in a round shape. Referring to FIG. 8, FIG. 8 illustrates a case in which the upper corner part 510 is formed in a round shape.

In this case (i.e., when the upper corner part is formed in the round shape), the fact that one end 410-1 of a first sealing part 410 is formed on an area within a predetermined distance R from the upper corner part 510 of a circumference of a cup P means that the one end 410-1 of the first sealing part 410 is formed on an area within a range of a virtual arc Q spaced a predetermined distance R from the upper corner part 510 having the rounded shape. In this case, the predetermined distance R may be 5 mm.

The analysis in this manner may be applied in the same manner even when the lower corner part 520 is formed in a round shape. Also, at this time, a predetermined distance that is a distance from the lower corner part 520 may be 5 mm.

In the secondary battery 10 according to the present invention, the third sealing part 430 may be bent in a direction of a thickness t (see FIG. 3) of the electrode assembly 100. In this case, a volume occupied by the third sealing part 430 may be reduced to improve capacity per unit volume of the secondary battery.

The battery pack according to the present invention may include a plurality of secondary batteries 10. The content with respect to the secondary battery 10 are substituted with the above contents.

### Method for manufacturing pouch type secondary battery

Referring to FIGS. 2 to 7, a method for manufacturing a pouch type secondary battery according to the present invention may include a process of preparing an electrode assembly 100 having a structure, in which electrodes and separators are alternately disposed, and a pouch type exterior 200, in which a cup P having a recessed shape is formed, a process of accommodating the electrode assembly 100 in the cup P, a process of folding the exterior 200 so that one area 210 and the other area 220 of the exterior 200 face each other, a process of disposing a first electrode lead 310 protruding outward through an upper circumference of the exterior 200 and a second electrode lead 320 protruding outward through a lower circumference of the exterior 200, and a process of forming a first sealing part 410 on the exterior 200 to cover the first electrode lead 310 and forming a second sealing part 420 on the exterior 200 to cover the second electrode lead 320.

Here, in the process of forming the first sealing part 410 and the second sealing part 420, one end of the first sealing part 410 may be sealed to be formed on an area within a predetermined distance R from an upper corner part 510 of a circumference of the cup P, and one end of the second sealing part 420 may be sealed to be formed on an area within a predetermined distance R from a lower corner part 520 of the circumference of the cup P. Here, the predetermined distance R may be 5 mm.

In addition, at this time, the one end of the first sealing part 410 may be an end of the left end and the right end of the first sealing part 410, which is provided to be adjacent to a folding part F, and the one end of the second sealing part 420 may be an end of the left end and the right end of the second sealing part 420, which is provided to be adjacent to the folding part F.

The process of forming the first sealing part 410 may be, more specifically, a process of performing sealing in two stages. The two-stage sealing may mean a normal lead sealing process and an additional sealing process.

FIG. 8 is a plan view illustrating a state in which the first sealing part 410 is formed through the normal lead sealing process and the additional sealing process.

Referring to FIG. 8, the normal lead sealing process may mean a process of sealing an area of the sealing part, which is disposed above the area within the predetermined distance from the upper corner part of the circumference of the cup P, through a sealing tool so that a pouch of a first area 210 and a pouch of a second area 220 cover a first electrode lead 310. As a result, the normal lead sealing area S1 may be formed.

In addition, the additional sealing process may mean a process of sealing the area within the predetermined distance from the upper corner part of the circumference of the cup P through the sealing tool so that the pouch of the first area 210 and the pouch of the second area 220 are bonded to each other. As a result, the additional lead sealing area S2 may be formed. The portion inside the virtual arc Q, which is spaced the predetermined distance R from the upper corner part 510, may be sealed in the additional sealing process. The area inside the virtual arc Q may mean a pouch area closer to the upper corner part 510 with respect to the virtual arc Q.

The first sealing part 410 may include a normal lead sealing area S1 and an additional sealing area S2 through the sealing process.

Here, the normal lead sealing area S1 may be an area sealed through the sealing tool so that an area disposed above the area within the predetermined distance from the upper corner part of the circumference of the cup covers the first electrode lead.

The additional sealing area S2 may be an area on which the area within the predetermined distance from the upper corner part of the circumference of the cup is sealed so that the pouch of the first area 210 and the pouch of the second area 220 are bonded to each other.

In the method for manufacturing the pouch type secondary battery according to the present invention, the normal lead sealing area S1 and the additional sealing S2 have different thicknesses for each section. In this case, the method for manufacturing the pouch type secondary battery according to the present invention may be secondary batteries having different sealing thicknesses for each section in the normal lead sealing area S1 and the additional sealing area S2.

For example, referring to FIG. 8, the sealing thickness may be different in a section a-b and a section b-c of FIG. 8. The section a-b may represent a normal pouch-pouch sealing thickness (reference sealing thickness), and the section b-c may have a thickness greater or less than that of the section a-b. Also, the sealing thickness may be constant or variable even within one section. That is, the sealing thickness may be constant within one section a-b, but the present invention is not limited thereto, and the sealing thickness may constantly increase or decrease in the section a-b. Furthermore, the sealing thickness may be irregularly changed even within one section. Also, the above description may be applied even within one section b-c.

When the sealing form is implemented in such various forms, since an optimal sealing part for preventing the pouch cracks from occurring is configured in accordance with a case in which a size, shape, type, material, thickness, etc. of the pouch vary, an excellent secondary battery in which the prevention of occurrence of the pouch cracks, which is an inherent effect of the present invention, is maximized for each pouch type may be manufactured.

In addition, referring to FIG. 7, the method for manufacturing the pouch type secondary battery according to the present invention may further include a process of forming a third sealing part 430 formed along a circumference of the electrode assembly 100 to connect the first sealing part 410 to the second sealing part 420. The third sealing part 430 may be formed after forming the first sealing part 410 and the second sealing part 420 (however, if one sealing tool is used as described above, the third sealing part 430, the first sealing part 410, and the second sealing part 420 may be formed at the same time). Here, one end of the third sealing part 430 may be connected to the first sealing part 410, and the other end of the third sealing part 430 may be connected to the second sealing part 420.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Secondary battery
100 : Electrode assembly
200: Exterior
210: First area
220: Second area
300; Electrode lead
310 : First electrode lead
320 : Second electrode lead
400: Sealing part
410: First sealing part
410-1: One end of first sealing part
420: Second sealing part
420-1: One end of second sealing part (420)
430: Third sealing part
510: Upper corner part of circumference of cup
520: Lower corner part of circumference of cup
P: Cup
L: Boundary of cup
F: Folding part
S1: Normal lead sealing area
S2: Additional sealing area
Q: Virtual arc spaced predetermined distance from upper corner part
Preferred examples of the invention are specified in the following items:
**Item 1.** A pouch type secondary battery comprising:
   an electrode assembly having a structure, in which electrodes and a separator are alternately disposed;
   a pouch type exterior in which a cup (P) having a shape recessed to accommodate the electrode assembly is formed; and
   an electrode lead electrically connected to the electrode assembly and protruding outward through a circumference of the exterior,
   wherein a sealing part is formed on the exterior along the circumference of the electrode assembly,
   the electrode lead comprises a first electrode lead protruding outward through an upper circumference of the exterior,
   the sealing part comprises a first sealing part formed to cover the first electrode lead, and
   one end of the first sealing part is formed on an area within a predetermined distance from an upper corner part of a circumference of the cup (P).
**Item 2.** The pouch type secondary battery of Item 1, wherein left and right ends of the first sealing part are formed on an area within a predetermined distance from an upper left corner part and an area within a predetermined distance from an upper right corner part of the circumference of the cup (P), respectively.
**Item 3.** The pouch type secondary battery of Item 1, wherein the electrode lead comprises a second electrode lead protruding outward through a lower circumference of the exterior,
   the sealing part comprises a second sealing part formed to cover the second electrode lead, and
   one end of the second sealing part is formed on an area within a predetermined distance from a lower corner part of the circumference of the cup (P).
**Item 4.** The pouch type secondary battery of Item 3, wherein left and right ends of the second sealing part are formed on an area within a predetermined distance from a lower left upper corner part and an area within a predetermined distance from a lower right corner part of the circumference of the cup (P), respectively.
**Item 5.** The pouch type secondary battery of any one of Items 1 to 4, wherein the predetermined distance is 5 mm.
**Item 6.** The pouch type secondary battery of Item 1, wherein an inner circumference of an area of the first sealing part, which is provided on an area within a predetermined distance from the upper corner part of the circumference of the cup (P) has a straight-line shape.
**Item 7.** The pouch type secondary battery of Item 1, wherein an inner circumference of an area of the first sealing part, which is provided on an area within a predetermined distance from the upper corner part of the circumference of the cup (P) has a curved shape.
**Item 8.** The pouch type secondary battery of Item 1, wherein an inner circumference of an area of the first sealing part, which is provided on an area within a predetermined distance from the upper corner part of the circumference of the cup (P) has straight-line and curved shapes.
**Item 9.** The pouch type secondary battery of Item 7 or 8, wherein the curved shape is formed to be concave when viewed from the electrode assembly.
**Item 10.** The pouch type secondary battery of Item 7 or 8, wherein the curved shape is formed to be convex when viewed from the electrode assembly.
**Item 11.** The pouch type secondary battery of Item 3, wherein the pouch type exterior comprises a first area and a second area,
   in the pouch type exterior, a folding part is formed on a boundary between the first area and the second area so that,
   when the first area is folded with respect to the second area, the first area and the second area face each other,
   one end of a left end and a right end of the first sealing part, which is provided to be adjacent to the folding part, is formed on an area within a predetermined distance from the upper corner part of the circumference of the cup (P), and
   one end of a left end and a right end of the second sealing part, which is provided to be adjacent to the folding part, is formed on an area within a predetermined distance from the lower corner part of the circumference of the cup (P).
**Item 12.** The pouch type secondary battery of Item 11, wherein the predetermined distance is 5 mm.
**Item 13.** The pouch type secondary battery of Item 3, wherein the sealing part further comprises a third sealing part formed to connect the first sealing part to the second sealing part.
**Item 14.** The pouch type secondary battery of Item 13, wherein an upper end of the third sealing part is connected to the first sealing part, and
   a lower end of the third sealing part is connected to the second sealing part.
**Item 15.** The pouch type secondary battery of Item 13, wherein the third sealing part is bent in a direction of a thickness (t) of the electrode assembly.
**Item 16.** The pouch type secondary battery of any one of Items 1 to 15, wherein at least one or more of the upper corner part and the lower corner part have a rounded shape.
**Item 17.** The pouch type secondary battery of Item 1, wherein the first sealing part comprises:
   a normal lead sealing area (S1) on which an area disposed above the area within a predetermined distance from the upper corner part of the circumference of the cup is sealed to cover the first electrode lead by a sealing tool; and
   an additional sealing area (S2) on which the area within the predetermined distance from the upper corner part of the circumference of the cup is sealed by the sealing tool.
**Item 18.** The pouch type secondary battery of Item 17, wherein the normal lead sealing area (S1) and the additional sealing area (S2) have different sealing thicknesses for each section.
**Item 19.** A battery pack comprising the secondary battery of Item 1.
**Item 20.** A method for manufacturing a pouch type secondary battery, the method comprising:
   a process of preparing an electrode assembly having a structure, in which electrodes and separators are alternately disposed, and a pouch type exterior, in which a cup (P) having a recessed shape is formed;
   a process of accommodating the electrode assembly in the cup; a process of folding the exterior so that one area and the other area of the exterior face each other;
   a process of disposing a first electrode lead protruding outward through an upper circumference of the exterior and a second electrode lead protruding outward through a lower circumference of the exterior;
   a process of forming a first sealing part on the exterior to cover the first electrode lead; and
   a process of forming a second sealing part on the exterior to cover the second electrode lead,
   wherein, in the process of forming the first sealing part, one end of the first sealing part is sealed to be formed on an area within a predetermined distance from the upper corner part of a circumference of the cup (P).
**Item 21.** The method of Item 20, wherein, in the process of forming the second sealing part, one end of the second sealing part is sealed to be formed on an area within a predetermined distance from the lower corner part of the circumference of the cup (P).
**Item 22.** The method of Item 20, wherein the process of forming the first sealing part comprises a two-stage sealing process comprising a normal lead sealing process and an additional sealing process.
**Item 23.** The method of Item 22, wherein the normal lead sealing process is a process of sealing an area, which is disposed above the area within the predetermined distance from the upper corner part of the circumference of the cup, through a sealing tool so that a pouch of a first area and a pouch of a second area cover the first electrode lead to form a normal lead sealing area (S1), and
   the additional lead sealing process is a process of sealing an area, which is disposed within the predetermined distance from the upper corner part of the circumference of the cup, through the sealing tool so that the pouch of the first area and the pouch of the second area are bonded to each other to form an additional sealing area (S2).
**Item 24.** The method of Item 23, wherein, in the process of forming the first sealing part, the normal lead sealing area (S1) and the additional sealing area (S2) have different sealing thicknesses for each section.
**Item 25.** The method of Item 20, further comprising a process of forming a third sealing part formed along a circumference of the electrode assembly to connect the first sealing part to the second sealing part.

## Claims

1. A pouch type secondary battery (10) comprising:
an electrode assembly (100) having a structure, in which electrodes and a separator are alternately disposed;
a pouch type exterior (200) in which a cup (P) having a shape recessed to accommodate the electrode assembly (100) is formed; and
an electrode lead (300) electrically connected to the electrode assembly (100) and protruding outward through a circumference of the exterior (200),
wherein a sealing part (400) is formed on the exterior (200) along the circumference of the electrode assembly (100),
the electrode lead (300) comprises a first electrode lead (310) protruding outward through an upper circumference of the exterior (200),
the sealing part (400) comprises a first sealing part (410) formed to cover the first electrode lead (310), and
one end (410-1) of the first sealing part (410) is formed on an area within a predetermined distance (R) from an upper corner part (510) of a circumference of the cup (P),
wherein the area within the predetermined distance (R) from the upper corner part (510) of the circumference of the cup (P) is defined as one of:
a virtual circle having a radius (R) centered on the upper corner part (510) of the circumference of the cup (P), or
a virtual arc (Q) spaced the predetermined distance (R) from the upper corner part (510) having a rounded shape,
wherein an inner circumference of an area of the first sealing part (410), which is provided on an area within a predetermined distance (R) from the upper corner part (510) of the circumference of the cup (P) has a curved shape, and
wherein the curved shape is formed to include both a concave shape and a convex shape when viewed from the electrode assembly (100).

2. The pouch type secondary battery (10) of claim 1, wherein left and right ends of the first sealing part (410) are formed on an area within a predetermined distance (R) from an upper left corner part (510) and an area within a predetermined distance (R) from an upper right corner part of the circumference of the cup (P), respectively.

3. The pouch type secondary battery (10) of claim 1, wherein the electrode lead (300) comprises a second electrode lead (320) protruding outward through a lower circumference of the exterior (200),
the sealing part (400) comprises a second sealing part (420) formed to cover the second electrode lead (320), and
one end of the second sealing part (420) is formed on an area within a predetermined distance (R) from a lower corner part (520) of the circumference of the cup (P).

4. The pouch type secondary battery (10) of any one of claims 1 to 3, wherein the predetermined distance (R) is 5 mm.

5. The pouch type secondary battery (10) of claim 1, wherein an inner circumference of an area of the first sealing part (410), which is provided on an area within a predetermined distance (R) from the upper corner part (510) of the circumference of the cup (P) has a straight-line shape.

6. The pouch type secondary battery (10) of claim 1, wherein an inner circumference of an area of the first sealing part (410), which is provided on an area within a predetermined distance (R) from the upper corner part (510) of the circumference of the cup (P) has straight-line and curved shapes.

7. The pouch type secondary battery (10) of claim 3, wherein the pouch type exterior (200) comprises a first area (210) and a second area (220),
in the pouch type exterior (200), a folding part (F) is formed on a boundary between the first area (210) and the second area (220) so that, when the first area (210) is folded with respect to the second area (220), the first area (210) and the second area (220) face each other,
one end of a left end and a right end of the first sealing part (410), which is provided to be adjacent to the folding part (F), is formed on an area within a predetermined distance (R) from the upper corner part (510) of the circumference of the cup (P), and
one end of a left end and a right end of the second sealing part (420), which is provided to be adjacent to the folding part (F), is formed on an area within a predetermined distance (R) from the lower corner part (520) of the circumference of the cup (P).

8. The pouch type secondary battery (10) of claim 7, wherein the predetermined distance (R) is 5 mm.

9. The pouch type secondary battery (10) of claim 3, wherein the sealing part (400) further comprises a third sealing part (430) formed to connect the first sealing part (410) to the second sealing part (420).

10. The pouch type secondary battery (10) of claim 9, wherein an upper end of the third sealing part (430) is connected to the first sealing part (410), and
a lower end of the third sealing part (430) is connected to the second sealing part (420).

11. The pouch type secondary battery (10) of any one of claims 1 to 10, wherein at least one or more of the upper corner part (510) and the lower corner part (520) have a rounded shape.

12. The pouch type secondary battery (10) of claim 1, wherein the first sealing part (410) comprises:
a normal lead sealing area (S1) on which an area disposed above the area within a predetermined distance (R) from the upper corner part (510) of the circumference of the cup (P) is sealed to cover the first electrode lead (310) by a sealing tool; and
an additional sealing area (S2) on which the area within the predetermined distance (R) from the upper corner part (510) of the circumference of the cup (P) is sealed by the sealing tool.

13. The pouch type secondary battery (10) of claim 12, wherein the normal lead sealing area (S1) and the additional sealing area (S2) have different sealing thicknesses for each section.

14. A method for manufacturing a pouch type secondary battery (10), the method comprising:
a process of preparing an electrode assembly (100) having a structure, in which electrodes and separators are alternately disposed, and a pouch type exterior (200), in which a cup (P) having a recessed shape is formed;
a process of accommodating the electrode assembly (100) in the cup (P);
a process of folding the exterior (200) so that one area and the other area of the exterior face each other;
a process of disposing a first electrode lead (310) protruding outward through an upper circumference of the exterior (200) and a second electrode lead (320) protruding outward through a lower circumference of the exterior (200);
a process of forming a first sealing part (410) on the exterior (200) to cover the first electrode lead (310); and
a process of forming a second sealing part (420) on the exterior (200) to cover the second electrode lead (320),
wherein, in the process of forming the first sealing part (410), one end of the first sealing part (410) is sealed to be formed on an area within a predetermined distance (R) from the upper corner part (510) of a circumference of the cup (P), wherein the area within the predetermined distance (R) from the upper corner part (510) of the circumference of the cup (P) is defined as one of:
a virtual circle having a radius (R) centered on the upper corner part (510) of the circumference of the cup (P), or
a virtual arc (Q) spaced a predetermined distance (R) from the upper corner part (510) having a rounded shape, and
wherein an inner circumference of an area of the first sealing part (410), which is provided on an area within a predetermined distance (R) from the upper corner part (510) of the circumference of the cup (P) has a curved shape, and
wherein the curved shape is formed to include both a concave shape and a convex shape when viewed from the electrode assembly (100).

15. The method of claim 14, wherein the process of forming the first sealing part (410) comprises a two-stage sealing process comprising a normal lead sealing process and an additional sealing process.

16. The method of claim 15, wherein the normal lead sealing process is a process of sealing an area, which is disposed above the area within the predetermined distance (R) from the upper corner part (510) of the circumference of the cup (P), through a sealing tool so that a pouch of the first area (210) and a pouch of the second area (220) cover the first electrode lead (310) to form a normal lead sealing area (S1), and
the additional lead sealing process is a process of sealing an area, which is disposed within the predetermined distance (R) from the upper corner part (510) of the circumference of the cup (P), through the sealing tool so that the pouch of the first area (210) and the pouch of the second area (220) are bonded to each other to form an additional sealing area (S2).

17. The method of claim 16, wherein, in the process of forming the first sealing part (410), the normal lead sealing area (S1) and the additional sealing area (S2) have different sealing thicknesses for each section.
